# EUROPÄISCHE PATENTSCHRIFT

(11) **EP 0 683 341 B1**
(45) Veröffentlichungstag und Bekanntmachung des Hinweises auf die Patenterteilung: **08.07.1998**
(21) Anmeldenummer: 95104799.2
(22) Anmeldetag: 31.03.1995
(51) Int. Cl.: F16K 35/02

(54) **Sanitärarmatur**
Sanitary armature
Armature sanitaire

(30) Priorität: 19.05.1994 DE 4417485
(43) Veröffentlichungstag der Anmeldung: 22.11.1995
(73) Patentinhaber: HANSA METALLWERKE AG, D-70567 Stuttgart (DE)
(72) Erfinder: Weinmann, Werner, D-70794 Filderstadt (DE)
(74) Vertreter: Ostertag, Ulrich

(56) Entgegenhaltungen:
- EP-A- 0 000 878
- EP-A- 0 621 427
- DE-C- 3 402 103
- DE-C- 4 038 141
- DE-U- 9 300 841
- US-A- 4 089 347

## Beschreibung

Die Erfindung betrifft eine Sanitärarmatur mit
a) einem verdrehbaren Handgriff;
b) einer Einrichtung, die einen lösbaren Anschlag für die Drehbewegung des Handgriffes bildet und umfaßt:
   ba) ein erstes stationäres Anschlagteil;
   bb) ein zweites, gemeinsam mit dem Handgriff bewegbares Anschlagteil, welches in einer bestimmten Drehstellung des Handgriffes in Anlage an das stationäre Anschlagteil kommt;
   bc) eine manuelle Auslöseeinrichtung, welche bei Betätigung das eine Anschlagteil derart aus der Anlage am anderen Anschlagteil zurückzieht, daß der Handgriff über die bestimmte Drehstellung hinaus verdreht werden kann.

Derartige Sanitärarmaturen sind bisher hauptsächlich als Thermostatventile bekannt geworden, bei denen mittels des verdrehbaren Handgriffes die Temperatur-Vorwähleinrichtung bedient wird. Bei diesen Ventilen wird durch den Drehanschlag am Handgriff der Bereich begrenzt, in welchem Temperaturen eingestellt werden können. Die obere Grenze des normalen Einstellbereiches wird bei etwa 38° C festgelegt und konstruktiv durch einen lösbaren Anschlag vorgegeben. Wünscht der Benutzer eine höhere Temperatur, so muß er eine manuelle Auslöseeinrichtung betätigen, mit welcher der lösbare Anschlag überwunden und der Handgriff in eine Winkelstellung verdreht werden kann, die einer höheren Temperatur entspricht.

Ähnliche lösbare Anschläge an Drehgriffen sind in jüngster Zeit auch bei der Mengeneinstellung von Sanitärarmaturen in Gebrauch genommen worden. Hier dient der lösbare Anschlag dazu, eine für die normale Benutzung ausreichende maximale Wassermenge vorzugeben, die dann aber nach Betätigung der manuellen Auslöseeinrichtung noch überschritten werden kann. Diese Maßnahme dient zur Wassereinsparung.

Bei vom Markt her bekannten Sanitärarmaturen der eingangs genannten Art wurde die manuelle Auslöseeinrichtung durch eine Art Kölbchen gebildet, welches in einer Zylinderbohrung des Handgriffes verschiebbar war und durch eine Feder radial nach außen gedrückt wurde. An dem Kölbchen wiederum war eine sich axial erstreckende Schraube befestigt, welche als bewegbares Anschlagteil diente. Durch Eindrücken des Kolbens gegen die Wirkung der Feder konnte die als Anschlagteil dienende Schraube aus der Anlage an einem stationären, also beispielsweise mit dem Armaturengehäuse der Sanitärarmatur verbundenen Anschlag gebracht werden. Diese bekannte Konstruktion erfordert verhältnismäßig viele Teile, nimmt verhältnismäßig viel Platz weg und ist in der Montage aufwendig.

Aus dem Dokument DE-U-93 00 841 ist ferner eine Sanitärarmatur mit den im Oberbegriff des Anspruchs 1 angegebenen Merkmalen bekannt. Auch hier besitzt die manuelle Auslöseeinrichtung die Form eines federbelasteten Kölbchens, welches in einer Zylinderbohrung des Handgriffes in radialer Richtung verschiebbar ist. Als Anschlagteil wird hier jedoch ein sich quer von dem Kölbchen weg erstreckender "Zapfen" eingesetzt. Die Nachteile dieser Ausgestaltung entsprechen denjenigen, die oben bereits für die vom Markt bekannten Sanitärarmaturen der im Oberbegriff des Anspruches 1 bezeichneten Gattung erörtert wurden.

Aus dem Dokument EP 0 000 878 A1 ist ferner ein Heizkörperventil bekannt, das ebenfalls - abgesehen von der unterschiedlichen Ventilart - die im Oberbegriff des Anspruches 1 angegebenen Merkmale aufweist. Hier ist zudem das stationäre Anschlagteil als elastische Anschlagfahne ausgebildet, die mit einer Stufe an der Innenfläche des Handgriffes zusammenwirkt. Die manuelle Auslöseeinrichtung, mit welcher die Anschlagfahne verformt werden kann, ist jedoch erneut ein unmittelbar auf die Anschlagfahne einwirkendes Kölbchen.

Aufgabe der vorliegenden Erfindung ist es, eine Sanitärarmatur der eingangs genannten Art so auszugestalten, daß die Herstellungs- und Montagekosten verringert sind und der Platzbedarf für die manuelle Auslöseeinrichtung so klein wie möglich ist.

Diese Aufgabe wird erfindungsgemäß dadurch gelöst, daß
c) das stationäre Anschlagteil als elastische Anschlagfahne ausgebildet ist, die an einem inneren, stationären Einsatz angeformt ist;
d) das bewegliche Anschlagteil als Stufe an der Innenfläche des Handgriffes oder eines mit diesem verbundenen äußeren Einsatzes ausgebildet ist, durch welche der Innenraum des Handgriffes bzw. des äußeren Einsatzes über einen bestimmten Winkelbereich im Durchmesser verkleinert wird,
   wobei die stationäre Anschlagfahne in unverformtem Zustand in den von der Stufe freigelassenen Bereich des Innenraumes des Handgriffs oder des äußeren Einsatzes hineinragt und in der bestimmten Winkelstellung an einem Ende der Stufe anliegt;
e) die manuelle Auslöseeinrichtung eine an den Handgriff oder den äußeren Einsatz angeformte elastische Betätigungslasche umfaßt, welche in der bestimmten Winkelstellung des Handgriffes von außen her an der Anschlagfahne anliegt und welche in dieser Stellung unter elastischer Verformung gemeinsam mit der Anschlagfahne radial nach innen drückbar ist, wodurch die Anschlagfahne vom Ende der Stufe freikommt und bei Weiterverdrehung des Handgriffes an der inneren Mantelfläche der Stufe entlang gleiten kann.

Bei der erfindungsgemäßen Ausgestaltung der Sanitärarmatur werden also die verschiedenen Elemente der manuellen Auslöseeinrichtung sowie die beiden Anschlagteile an den Handgriff bzw. einen äußeren Einsatz sowie einen inneren Einsatz bereits bei deren spritztechnischer Herstellung angeformt. Statt Federn wird ausschließlich von den elastischen Eigenschaften des Materials Gebrauch gemacht. Aufwendige Montagevorgänge sind nicht erforderlich. Besonders die Betätigungslasche, welche das Kölbchen der bekannten Sanitärarmatur als Auslöseelement ersetzt, nimmt sehr viel weniger radialen Platz ein als Kolben und zugehörige Zylinderöffnung.

Nach einer bevorzugten Ausgestaltung der Erfindung weist die das bewegliche Anschlagteil bildende Stufe an ihrem zweiten Ende eine radial nach innen zeigende Rippe auf, welche ein unüberwindliches Hindernis für die Anschlagfahne darstellt. Durch diese Rippe wird also ein zweiter Drehanschlag gebildet, der nach dem ersten, überwindbaren Anschlag bei Weiterverdrehung um einen bestimmten Winkelbereich wirksam wird und selbst nicht mehr überwunden werden kann.

Die Betätigungslasche ist im einfachsten Falle an drei Seiten durch Schnitte aus der Mantelfläche des Handgriffes oder des äußeren Einsatzes herausgetrennt und an der vierten Seite einstückig an die Mantelfläche angeformt. Die Betätigungslasche ist also in diesem Falle tatsächlich nichts anderes als ein Stück der Mantelfläche des Handgriffes bzw. des äußeren Einsatzes selbst, das durch die drei erwähnten Schnitte eine besondere Flexibilität in radialer Richtung erhält.

Bei dieser Ausgestaltung empfiehlt sich wiederum besonders diejenige Ausführungsform, bei welcher die Betätigungslasche sich in azimutaler Richtung erstreckt. Auf diese Weise läßt sich die Betätigungslasche besonders einfach radial nach innen verformen.

Die Betätigungslasche kann einen nach außen zeigenden Dorn aufweisen, auf welchen ein Betätigungsknopf aufgedrückt ist. Dieser Betätigungsknopf ist für die Finger des Benutzers besonders gut zugänglich, da er sich über die Außenfläche des Handgriffes erhebt.

Die Betätigungslasche ist bei einer weiteren bevorzugten Ausführungsform der Erfindung an einem äußeren Einsatz angeformt, der durch elastische Verrastung mit dem Handgriff verbunden ist. In diesem Falle erscheint also die Außenfläche des Handgriffes unversehrt, während die die Betätigungslasche bildenden Schnitte in dem äußeren Einsatz geführt sind. Der Handgriff selbst wird nur noch von einer Durchgangsbohrung durchzogen, die ihrerseits von dem Betätigungsknopf durchsetzt wird.

Der innere Einsatz sollte in unterschiedlichen Winkelpositionen festlegbar sein.

Der Handgriff bekommt eine zusätzliche Drehführung, wenn der innere Einsatz mindestens in einem Bereich den äußeren Einsatz bzw. den Handgriff von innen her radial abstützt.

Ein Ausführungsbeispiel der Erfindung wird nachfolgend anhand der Zeichnung näher erläutert; es zeigen
- Figur 1:: einen Schnitt durch einen auf ein herkömmliches Absperrventil-Oberteil aufgesetzten Handgriff sowie die zugehörige Einrichtung zur lösbaren Begrenzung des Drehwinkels;
- Figur 2:: einen Axialschnitt durch die Anordnung von Figur 1.

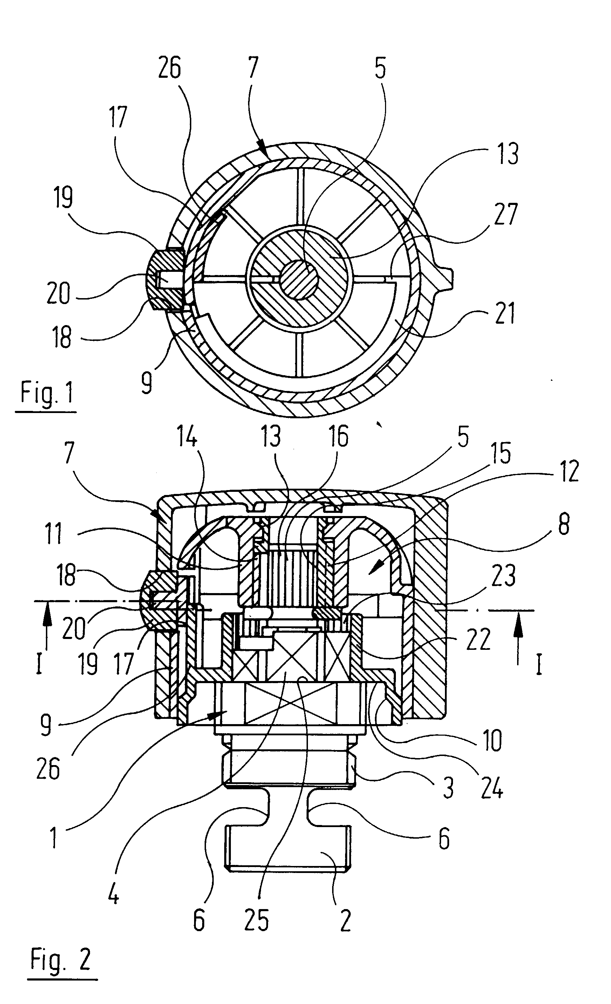

In Figur 2 ist ein herkömmliches Absperrventil-Oberteil dargestellt und dort mit dem Bezugszeichen 1 gekennzeichnet. Es umfaßt ein Gehäuse 2, dessen nach unten ragender Bereich mit einem Außengewinde 3 versehen ist. Das Absperrventil-Oberteil 1 wird mit Hilfe des Außengewindes 3 in ein nicht dargestelltes Armaturengehäuse eingeschraubt, wozu das Absperrventil-Gehäuse 2 im oberen Bereich mit einer Mehrkantfläche 4 versehen ist.

Das Gehäuse 2 des Absperrventil-Oberteiles 1 enthält im unteren Bereich zwei Steuerscheiben (nicht dargestellt), von denen eine stationär, das heißt unverdrehbar, und die andere mittels einer das gesamte Absperrventil 1 axial durchsetzenden Ventilspindel 5 verdrehbar ist. Das Wasser fließt über Zulauföffnungen 6 im unteren Bereich des Gehäuses 2 zu den dort befindlichen Steuerscheiben und durchtritt - je nach Drehstellung der drehbaren Steuerscheibe - in den Steuerscheiben vorgesehene Öffnungen und strömt dann an der Unterseite des Gehäuses 2 in axialer Richtung aus.

Die Ventilspindel 5 wird mit Hilfe eines becherförmigen Handgriffes 7 verdreht, der kraftschlüssig mit der Ventilspindel 5 verbunden ist.

Eine einen lösbaren Drehanschlag bildende Einrichtung 8 umfaßt im wesentlichen einen äußeren Einsatz 9 sowie einen inneren Einsatz 10.

Der äußere Einsatz 9 ist - ähnlich wie der Handgriff 7 - im wesentlichen becherförmig ausgebildet, wobei seine zylindrische Außenmantelfläche an der zylindrischen Innenmantelfläche des Handgriffes 7 anliegt. Äußerer Einsatz 9 und Handgriff 7 sind in geeigneter Weise (in der Zeichnung nicht dargestellt) miteinander verbunden, derart, daß der innere Einsatz 9 die Drehbewegung des Handgriffes 7 mitmacht.

An den Bodenbereich des becherförmigen äußeren Einsatzes 9 ist ein hohlzylindrischer Kragen 11 einstückig angeformt, der eine innere, achsparallele Keilverzahnung 12 aufweist.

In diese Keilverzahnung 12 ist ein geschlitztes, hohlzylindrisches Adapterstück 13 eingeschoben, das seinerseits auf der äußeren Mantelfläche eine der Keilverzahnung 12 entsprechende eigene Keilverzahnung 14 und an der inneren Mantelfläche eine weitere Keilverzahnung 15 aufweist. Das Adapterstück 13 ist mit seiner inneren Keilverzahnung 15 auf eine äußere Keilverzahnung 16 aufgeschoben, die am Kopf der Ventilspindel 5 angebracht ist.

Ersichtlich ist die Anordnung so, daß eine Drehbewegung des Handgriffes 7 über den äußeren Einsatz 9 und das Adapterstück 13 auf die Ventilspindel 5 übertragen wird, wodurch die bewegliche Steuerscheibe im unteren Bereich des Absperrventil-Gehäuses 2 verdreht wird.

Durch zwei parallele, sich in Umfangsrichtung erstreckende Schnitte und einen die beiden azimutalen Schnitte in axialer Richtung miteinander verbindenden Schnitt ist in der Mantelfläche des äußeren Einsatzes 9 eine Betätigungslasche 17 ausgebildet, welche an einem azimutalen Ende einstückig mit dem äußeren Einsatz 9 verbunden ist. Aufgrund der Elastizität des für den äußeren Einsatz 9 verwendeten Kunststoffmaterials kann die Betätigungslasche 17, insbesondere in der Nähe ihres freien Endes, radial nach innen gedrückt werden. Hierzu ist ein eine Bohrung 18 in der Zylinderfläche des Handgriffes 7 durchsetzender Betätigungsknopf 19 vorgesehen, der auf einen an die Außenfläche der Betätigungslasche 17 angeformten Dorn 20 aufgepreßt ist.

An die Innenfläche des äußeren Einsatzes 9 ist eine Stufe 21 angeformt, die sich über einen bestimmten Winkelbereich erstreckt, wie dies insbesondere aus Figur 1 zu erkennen ist. Die Stufe 21 beginnt in einer axialen Höhe, die im Bereich der Betätigungslasche 17 liegt und erstreckt sich von dort auf den Boden des äußeren Einsatzes 9 zu. Sie verringert in diesem Bereich den lichten Durchmesser des Innenraumes des äußeren Einsatzes 9. Die Stufe 21 dient, wie weiter unten noch deutlich werden wird, als (überwindbarer) Drehanschlag.

Der innere Einsatz 10, der - wie bereits erwähnt - das zweite Teil derjenigen Einrichtung 8 ist, welche einen Drehanschlag bildet, ist mit einem zur Ventilspindel 5 koaxialen Kragen 22 versehen, der eine innere Keilverzahnung 23 trägt. Der innere Einsatz 10 ist mit der Keilverzahnung 23 so formschlüssig auf die Mehrkantfläche 4 des Absperrventil-Gehäuses 2 aufgeschoben, daß er gegenüber diesem nicht verdrehbar ist. Eine Axialfixierung des äußeren Einsatzes 10 an dem Gehäuse 2 des Absperrventil-Oberteiles 1 erfolgt durch Anlage einer Stufe 24 an der Innenkontur des inneren Einsatzes 10 auf einer Stufe 25 an der Außenkontur des Absperrventil-Gehäuses 2.

In seinem in Figur 2 unteren Bereich liegt die zylindrische Außenfläche des inneren Einsatzes 10 an der zylindrischen inneren Mantelfläche des äußeren Einsatzes 9 verschiebbar an. Der untere Rand des inneren Einsatzes 10 kann sich an dem in der Zeichnung nicht dargestellten Armaturengehäuse abstützen.

Der innere Einsatz 10 ist mit einer axial nach oben ragenden Anschlagfahne 26 ausgestattet. Diese ist selbst als Teil einer Zylinderfläche ausgebildet und besitzt einen solchen Radius, daß sie - bei der entsprechenden Winkelstellung des Handgriffes 7 - an der inneren Mantelfläche der Betätigungslasche 17 anliegt. Ihre axiale Erstreckung in Figur 2 nach oben reicht über die Stufe 21 an dem äußeren Einsatz 9 hinaus, derart, daß sie ohne elastische Verformung nur in denjenigen Winkelbereich des äußeren Einsatzes hineinragen kann, in dem sich die Stufe 21 nicht befindet. Eine derartige Winkelposition des Handgriffes 7 ist in Figur 1 dargestellt.

Die Funktion der oben beschriebenen Einrichtung 8 bei der lösbaren Begrenzung des Drehwinkels des Handgriffes 7 ist wie folgt:

Im "Normalbetrieb" befindet sich die Anschlagfahne 26 des inneren Einsatzes 10 in einer Winkelposition außerhalb des Bereiches der Stufe 21 des äußeren Einsatzes 9. Der Handgriff 7 kann nunmehr jeweils so weit verdreht werden, bis der eine oder der andere axiale Begrenzungsrand der Anschlagfahne 26 an dem einen oder dem anderen Ende der Stufe 21 anschlägt. Der "normale" Winkel, um welchen der Handgriff 7 und damit die bewegliche Steuerscheibe innerhalb des Absperrventil-Oberteiles 2 verdreht werden kann, entspricht somit 360° abzüglich des Winkels, welchen die Stufe 21 am äußeren Einsatz 9 einschließt und abzüglich des Winkels, welchen die Anschlagfahne 26 am inneren Einsatz 10 einschließt. Die geometrische Zuordnung zwischen der Winkelposition der Durchtrittsöffnungen in den Steuerscheiben innerhalb des Absperrventil-Gehäuses 2 und der Anschlagfahne 26 ist so, daß das Ventil geschlossen ist, wenn das in Figur 1 rechte Ende der Stufe 21 an dem in Figur 1 rechten axialen Begrenzungsrand der Anschlagfahne 26 anliegt. Das Absperrventil-Oberteil kann dann durch Verdrehen des Handgriffes 7 im Uhrzeigersinn (in der Sicht von Figur 1) geöffnet werden, bis eine maximale Öffnungsposition erreicht ist, an welcher der in Figur 1 linke axiale Begrenzungsrand der Anschlagfahne 26 an dem in Figur 1 linken Ende der Stufe 21 anschlägt. In dieser Winkelposition ist das Absperrventil noch nicht vollständig geöffnet; sie legt jedoch eine Durchflußmenge fest, die beim normalen, häufigsten Gebrauch der Sanitärarmatur ausreicht. Soll in Ausnahmefällen das Absperrventil vollständig geöffnet werden, so kann dies auf folgende Weise geschehen:

Drückt der Benutzer der Sanitärarmatur den Betätigungsknopf 19 radial nach innen, so wird über die elastisch verformbare Betätigungslasche 17 am äußeren Einsatz 9 das axial obere Ende der Anschlagfahne 26 radial nach innen gedrückt. In dieser elastisch nach innen verformten Position kann die Anschlagfahne 26 nunmehr über das in Figur 1 linke Ende der Stufe 21 vorrücken, so daß eine weitere Verdrehung des Handgriffes 7 möglich ist. Der Betätigungsknopf 19 kann nunmehr wieder losgelassen werden; er wird durch die sich in ihre Ruheposition entspannende Betätigungslasche 17 des äußeren Einsatzes 9 wieder radial nach außen geführt. Die Anschlagfahne 26 liegt dagegen unter elastischer Vorspannung an der inneren Mantelfläche der Stufe 21 des äußeren Einsatzes 9 an.

Der Handgriff 7 kann jetzt, wie aus Figur 1 besonders deutlich wird, weiter im Uhrzeigersinn verdreht werden, bis eine an das in Figur 1 rechte Ende der Stufe 21 angeformte, radial nach innen zeigende Rippe 27 an den entsprechenden axialen Begrezungsrand der Anschlagfahne 26 anstößt.

Wird das Absperrventil-Oberteil 2 wieder geschlossen, so federt die Anschlagfahne 26 in ihre entspannte Position wieder zurück, sobald die Stufe 21 am äußeren Einsatz 9 die Anschlagfahne 26 freigegeben hat. Dann wirkt erneut die Stufe 21 an beiden Enden als Drehanschlag für den Handgriff 7; der "normale" Drehwinkelbereich ist jetzt wieder verfügbar.

## Patentansprüche

1. Sanitärarmatur mit
a) einem verdrehbaren Handgriff;
b) einer Einrichtung, die einen lösbaren Anschlag für die Drehbewegung des Handgriffes bildet und umfaßt:
ba) ein erstes stationäres Anschlagteil;
bb) ein zweites, gemeinsam mit dem Handgriff bewegbares Anschlagteil, welches in einer bestimmten Drehstellung des Handgriffes in Anlage an das stationäre Anschlagteil kommt;
bc) eine manuelle Auslöseeinrichtung, welche bei Betätigung das eine Anschlagteil derart aus der Anlage an dem anderen Anschlagteil zurückzieht, daß der Handgriff über die bestimmte Drehstellung hinaus verdreht werden kann,
dadurch gekennzeichnet, daß
c) das stationäre Anschlagteil als elastische Anschlagfahne (26) ausgebildet ist, die an einem inneren, stationären Einsatz (10) angeformt ist;
d) das bewegliche Anschlagteil als Stufe (21) an der Innenfläche des Handgriffes (7) oder eines mit diesem verbundenen äußeren Einsatzes (9) ausgebildet ist, durch welche der Innenraum des Handgriffes (7) bzw. des äußeren Einsatzes (9) über einen bestimmten Winkelbereich im Durchmesser verringert wird,
wobei die stationäre Anschlagfahne (26) in unverformtem Zustand in den von der Stufe (21) freigelassenen Bereich des Innenraumes des Handgriffes (7) oder des äußeren Einsatzes (9) hineinragt und in der bestimmten Winkelstellung an einem Ende der Stufe (21) anliegt;
e) die manuelle Auslöseeinrichtung eine an den Handgriff (7) oder den äußeren Einsatz (9) angeformte elastische Betätigungslasche (17) umfaßt, welche in der bestimmten Winkelstellung des Handgriffes (7) von außen her an der Anschlagfahne (26) anliegt und welche in dieser Stellung unter elastischer Verformung gemeinsam mit der Anschlagfahne (26) radial nach innen drückbar ist, wodurch die Anschlagfahne (26) vom Ende der Stufe (21) freikommt und bei Weiterverdrehung des Handgriffes (7) an der inneren Mantelfläche der Stufe (21) entlang gleiten kann.

2. Sanitärarmatur nach Anspruch 1, dadurch gekennzeichnet,
daß die das bewegliche Anschlagteil bildende Stufe (21) an ihrem zweiten Ende eine radial nach innen zeigende Rippe (27) aufweist, welche ein unüberwindliches Hindernis für die Anschlagfahne (26) darstellt.

3. Sanitärarmatur nach einem der vorhergehenden Ansprüche,
dadurch gekennzeichnet, daß die Betätigungslasche (17) an drei Seiten durch Schnitte aus der Mantelfläche des Handgriffs (7) oder des äußeren Einsatzes (9) herausgetrennt und an der vierten Seite einstückig an die Mantelfläche angeformt ist.

4. Sanitärarmatur nach Anspruch 3, dadurch gekennzeichnet,
daß die Betätigungslasche (17) sich in azimutaler Richtung erstreckt.

5. Sanitärarmatur nach einem der vorhergehenden Ansprüche,
dadurch gekennzeichnet, daß die Betätigungslasche (17) einen nach außen zeigenden Dorn (20) aufweist, auf welchen ein Betätigungsknopf (19) aufgedrückt ist.

6. Sanitärarmatur nach einem der vorhergehenden Ansprüche,
dadurch gekennzeichnet, daß die Betätigungslasche (17) an einen äußeren Einsatz (9) angeformt ist und dieser durch elastische Verrastung mit dem Handgriff (7) verbunden ist.

7. Sanitärarmatur nach einem der vorhergehenden Ansprüche,
dadurch gekennzeichnet, daß der innere Einsatz (10) in unterschiedlichen Winkelpositionen festlegbar ist.

8. Sanitärarmatur nach einem der vorhergehenden Ansprüche,
dadurch gekennzeichnet, daß der innere Einsatz (10) mindestens in einem Bereich den äußeren Einsatz (9) bzw. den Handgriff (7) von innen her radial abstützt.

9. Sanitärarmatur nach einem der vorhergehenden Ansprüche,
dadurch gekennzeichnet, daß der Handgriff (7) mit einem Mengeneinstellventil verbunden ist.

10. Sanitärarmatur nach einem der vorhergehenden Ansprüche,
dadurch gekennzeichnet, daß der Handgriff mit der Temperatur-Vorwähleinrichtung eines Thermostatventiles verbunden ist.

## Claims

1. Sanitary fitting having:
a) a handle which can be turned;
b) an apparatus which forms a releasable stop for the rotational movement of the handle and comprises:
ba) a first, stationary stop part;
bb) a second stop part which can be moved jointly with the handle and comes into abutment, when the handle is in a specific rotational position, against the stationary stop part;
bc) a manual triggering apparatus which, when actuated, draws the one stop part back from abutment against the other stop part in such a way that the handle can be turned beyond the specific rotational position,
characterised in that
c) the stationary stop part is constructed as an elastic stop vane (26) which is moulded onto an internal, stationary insert (10);
d) the moving stop part is constructed as a step (21) on the internal face of the handle (7) or of an external insert (9) connected to the latter, by which step the interior of the handle (7) or of the external insert (9) is reduced in diameter over a specific angular range,
the stationary stop vane (26) projecting, in the non-deformed state, into that region of the interior of the handle (7) or of the external insert (9) left clear by the step (21), and abutting, in the specific angular position, against one end of the said step (21) ;
e) the manual triggering apparatus comprises an elastic actuating flap (17) which is moulded onto the handle (7) or the external insert (9), abuts, when the handle (7) is in the specific angular position, against the stop vane (26) from the outside and, in this position, can be pressed radially inwards, jointly with the stop vane (26), with elastic deformation, as a result of which the stop vane (26) comes free from the end of the step (21) and, when the handle (7) is turned further, is able to slide along the internal superficies of the said step (21).

2. Sanitary fitting according to claim 1, characterised in that the step (21) forming the moving stop part has, at its second end, a rib (27) which points radially inwards and represents an unsurmountable obstacle for the stop vane (26).

3. Sanitary fitting according to one of the preceding claims, characterised in that the actuating flap (17) is separated out from the superficies of the handle (7) or of the external insert (9) on three sides by cuts, and is moulded onto the said superficies in one piece on the fourth side.

4. Sanitary fitting according to claim 3, characterised in that the actuating flap (17) extends in the azimuthal direction.

5. Sanitary fitting according to one of the preceding claims, characterised in that the actuating flap (17) has an outwardly pointing pin (20), onto which an actuating button (19) is pressed.

6. Sanitary fitting according to one of the preceding claims, characterised in that the actuating flap (17) is moulded onto an external insert (9) and the latter is connected to the handle (7) by elastic notching engagement.

7. Sanitary fitting according to one of the preceding claims, characterised in that the internal insert (10) is capable of being immobilised in different angular positions.

8. Sanitary fitting according to one of the preceding claims, characterised in that the internal insert (10) supports the external insert (9) or the handle (7) radially from the inside, at least in one region.

9. Sanitary fitting according to one of the preceding claims, characterised in that the handle (7) is connected to a quantity-adjusting valve.

10. Sanitary fitting according to one of the preceding claims, characterised in that the handle is connected to the temperature-preselecting apparatus of a thermostat valve.

## Revendications

1. Appareil de robinetterie sanitaire, avec
a) une poignée tournante ;
b) un dispositif, qui constitue une butée libérable pour le mouvement de rotation de la poignée et comprend :
ba) une première partie de butée, stationnaire ;
bb) une seconde partie de butée, qui est mobile conjointement avec la poignée et qui vient en application contre la partie de butée stationnaire dans une position donnée de rotation de la poignée ;
bc) un dispositif de libération manuelle qui, lorsqu'il est actionné, retire l'une des parties de butée de son application contre l'autre partie de butée de telle sorte que la poignée peut être tournée au-delà de la position donnée de rotation,
**caractérisé** en ce que
c) la partie de butée stationnaire est réalisée sous forme de talon de butée élastique (26), qui est formé sur une pièce rapportée intérieure stationnaire (10);
d) la partie de butée mobile est réalisée sous forme de gradin (21) sur la face intérieure de la poignée (7) ou d'une pièce rapportée extérieure (9) assemblée à cette dernière, gradin par lequel le diamètre de l'espace intérieur de la poignée (7) ou, selon le cas, de la pièce rapportée extérieure (9) est réduit sur une plage angulaire donnée,
le talon de butée stationnaire (26) pénétrant, à l'état non déformé, dans la région de l'espace intérieur de la poignée (7) ou de la pièce rapportée extérieure (9) qui est laissée libre par le gradin (21) et s'appliquant, dans la position angulaire donnée, contre une extrémité du gradin (21) ;
e) le dispositif de libération manuelle comprend une patte d'actionnement élastique (17) formée sur la poignée (7) ou la pièce rapportée extérieure (9), patte qui, dans la position angulaire donnée de la poignée (7), s'applique de l'extérieur contre le talon de butée (26) et qui, dans cette position, peut être pressée radialement vers l'intérieur en se déformant élastiquement conjointement avec le talon de butée (26), de sorte que le talon de butée (26) se dégage de l'extrémité du gradin (21) et, tandis que la poignée (7) continue à être tournée, peut glisser le long de la face d'enveloppe intérieure du gradin (21).

2. Appareil de robinetterie sanitaire selon la revendication 1, **caractérisé** en ce que le gradin (21) constituant la partie de butée mobile présente, à sa seconde extrémité, une nervure (27) dirigée radialement vers l'intérieur, qui constitue un obstacle insurmontable pour le talon de butée (26).

3. Appareil de robinetterie sanitaire selon une des revendications précédentes, **caractérisé** en ce que la patte d'actionnement (17) est, sur trois côtés, détachée par des découpes de la face d'enveloppe de la poignée (7) ou de la pièce rapportée extérieure (9) et, sur le quatrième côté, est solidaire de la face d'enveloppe.

4. Appareil de robinetterie sanitaire selon la revendication 3, **caractérisé** en ce que la patte d'actionnement (17) s'étend en direction azimutale.

5. Appareil de robinetterie sanitaire selon une des revendications précédentes, **caractérisé** en ce que la patte d'actionnement (17) présente un tenon (20) dirigé vers l'extérieur, sur lequel est emmanché un bouton d'actionnement (19).

6. Appareil de robinetterie sanitaire selon une des revendications précédentes, **caractérisé** en ce que la patte d'actionnement (17) est formée sur une pièce rapportée extérieure (9), et cette dernière est assemblée à la poignée (7) par crantage élastique.

7. Appareil de robinetterie sanitaire selon une des revendications précédentes, **caractérisé** en ce que la pièce rapportée intérieure (10) peut être fixée dans différentes positions angulaires.

8. Appareil de robinetterie sanitaire selon une des revendications précédentes, **caractérisé** en ce que la pièce rapportée intérieure (10) soutient, au moins dans une région, la pièce rapportée extérieure (9) ou, selon le cas, la poignée (7) radialement de l'intérieur.

9. Appareil de robinetterie sanitaire selon une des revendications précédentes, **caractérisé** en ce que la poignée (7) est assemblée à un régulateur de débit.

10. Appareil de robinetterie sanitaire selon une des revendications précédentes, **caractérisé** en ce que la poignée est assemblée au présélecteur de température d'une vanne thermostatique.
